# EUROPÄISCHE PATENTSCHRIFT

(11) **EP 1 130 484 B1**
(45) Veröffentlichungstag und Bekanntmachung des Hinweises auf die Patenterteilung: **02.11.2006**
(21) Anmeldenummer: 00103749.8
(22) Anmeldetag: 23.02.2000
(51) Int. Cl.: G05B 19/042

(54) **Elektrofluidisches Steuer- und/oder Antriebssystem**
Electrofluidic control- and/or drive system
Système de commande et/ou d' entrainement électro- hydraulique

(43) Veröffentlichungstag der Anmeldung: 05.09.2001
(73) Patentinhaber: FESTO AG & Co, 73734 Esslingen (DE)
(72) Erfinder: Schwarz, Michael, 73776 Altbach (DE)
(74) Vertreter: Vetter, Hans

(56) Entgegenhaltungen:
- WO-A-94/04831
- US-A- 4 918 690
- US-A- 5 452 201
- US-A- 5 656 903

## Beschreibung

Die Erfindung betrifft ein elektrofluidisches Steuer- und/oder Antriebssystem mit mehreren Aktoranordnungen, die wenigstens teilweise als fluidische Aktoranordnungen ausgebildet sind, wobei jede Aktoranordnung mit einer elektronischen Steuervorrichtung versehen ist.

Aus der EP 0 608 245 B1 ist ein solches elektrofluidisches Steuersystem bekannt, bei dem verschiedene als Ventilanordnungen ausgebildete Aktoranordnungen, die auch als Ventilinseln bezeichnet werden können, jeweils eine solche elektronische Steuervorrichtung besitzen. Dabei ist eine dieser Steuervorrichtungen als Masterstation ausgebildet, die die übrigen Steuervorrichtungen steuert bzw. die das Gesamtprogramm für den Gesamtablauf enthält. Insbesondere bei einer sehr großen Zahl sehr komplexer Aktoranordnungen ist daher ein sehr aufwendiges und kompliziertes Gesamtprogramm erforderlich, wobei die Anzahl und Dichte der übertragenen Daten sehr groß werden kann. Dies ist einmal eine Quelle für Störungen, und zum anderen sind hohe Anforderungen an die Übertragungsgeschwindigkeit und -qualität sowie an die Leistungsfähigkeit der Masterstation zu stellen. Dies führt insgesamt zu einem sehr teuren und komplexen System. Kommen zusätzliche Aktoranordnungen hinzu oder ändern sich innerhalb einer Aktoranordnung deren Aktoren oder deren Arbeitsablauf, so sind entsprechende Programmänderungen in der Masterstation erforderlich.

Aus der US-A-5 452 201 ist eine Steuer- und/oder Antriebsanordnung für einen Elektromotor bekannt, wobei Aktoren jeweils mit einer autonomen programmgesteuerten elektronischen Steuervorrichtung versehen und über Busleitungen zur Datenübertragung miteinander verbunden sind. Ein PC dient zur Programmierung der einzelnen Steuervorrichtungen, die auch untereinander über die Busleitungen kommunizieren können. Die bekannte Anordnung betrifft eine reine Elektromotorsteuerung und ist nicht für fluidische Aktoranordnungen vorgesehen. Die verkabelung über die Busleitungen ist insbesondere bei einer Vielzahl von Aktoren und entsprechenden Steuervorrichtungen aufwändig und arbeitsintensiv.

Eine Aufgabe der vorliegenden Erfindung liegt daher darin, ein elektrofluidisches Steuer- und/oder Antriebssystem zu schaffen, das auch bei einer Vielzahl von komplexen Aktoranordnungen bei geringeren Systemvoraussetzungen und leichterer Programmierbarkeit auch bei Systemänderungen schnelle und einfachere Anpassungen ermöglicht.

Diese Aufgabe wird erfindungsgemäß durch die Merkmale des Anspruchs 1 gelöst.

Erfindungsgemäß sind alle elektronischen Steuervorrichtungen der verschiedenen Aktoranordnungen gleichberechtigt und autonom, so dass in den jeweiligen Grundprogrammierungen jeweils nur die zugeordneten Aktoren und eventuell Sensoren der jeweiligen Aktoranordnung berücksichtigt werden müssen. Darüber hinaus müssen lediglich Programmstart- und/oder Programmauslösebefehle für jeweils eine oder mehrere Aktoranordnungen eingesetzt werden, um nach Ablauf bestimmter Arbeitsvorgänge die Steuervorrichtung einer anderen Aktoranordnung zu veranlassen, ihrerseits mit ihrem Programm zu beginnen oder ein solches fortzusetzen. Ändert sich der Ablauf oder ändern sich die Komponenten einer Aktoranordnung, so muss im allgemeinen nur das Steuerprogramm der zugeordneten Steuervorrichtung geändert werden. Die Steuerprogramme der übrigen Steuervorrichtungen bleiben im allgemeinen davon unberührt. Kommt eine zusätzliche Aktoranordnung hinzu, so müssen lediglich die Programmstart- und/oder Programmauslösebefehle oder auch nur ein solcher Befehl in einer oder mehreren der anderen Steuervorrichtungen geändert werden. Besonders vorteilhaft und variabel ist dabei die Ausbildung der Kommunikationseinrichtung als drahtlose Signalübertragungseinrichtung, beispielsweise als Funkübertragungssystem.

Durch die in den Unteransprüchen aufgeführten Maßnahmen sind vorteilhafte Weiterbildungen und Verbesserungen des im Anspruch 1 angegebenen Steuer- und/oder Antriebssystems möglich.

Die Aktoranordnungen enthalten vorzugsweise wenigstens teilweise mehrere Aktoren, wobei es sich um gleichartige oder verschiedenartige Aktoren jeweils handeln kann. Dabei können diese Aktoranordnungen wenigstens teilweise fluidische und elektrische Aktoren oder nur fluidische oder nur elektrische Aktoren aufweisen.

Bei solchen Aktoren handelt es sich beispielsweise um Servoantriebe, Stellantriebe, Linearantriebe, Drehantriebe, Motoren, Kolben-Zylinder-Anordnungen und/oder Ventile.

Den Steuervorrichtungen sind zweckmäßigerweise wenigstens teilweise Sensoren zugeordnet, um beispielsweise interne Regelvorgänge durchführen zu können, wobei diese Sensoren vorzugsweise in oder an den entsprechenden Aktoranordnungen vorgesehen sein können.

Die Steuervorrichtungen selbst können ebenfalls an oder in den Aktoranordnungen angeordnet oder integriert sein.

In vorteilhafter Weise steht eine Fehlermelde- und/oder registrieranordnung mit der Kommunikationseinrichtung in Wirkverbindung, und die Steuervorrichtungen besitzen Mittel zur Übertragung eventueller Fehler- oder Störungsmeldungen an die Fehlermelde- und/oder -registrieranordnung, wobei eine der Steuervorrichtungen als Fehlermelde- und/oder registrieranordnung ausgebildet oder eine separate Fehlermelde- und/oder -registrieranordnung vorgesehen ist. Hierdurch können Fehler- oder Störungsmeldungen des gesamten Systems zentral angezeigt und/oder registriert werden, wodurch ein einfacher und unkomplizierter Zugriff möglich ist.

Um zu verhindern, dass durch Ausbleiben eines Programm-start- und/oder Programmauslösebefehls das gesamte System ohne Fehlermeldung blockiert wird, weisen die elektronischen Steuervorrichtungen Mittel zur wenigstens teilweisen Überwachung des Funktionsablaufs des gesamten Systems auf, wobei insbesondere Zeitüberwachungseinrichtungen für bestimmte Eingangsbefehle vorgesehen sind. Wenn somit innerhalb eines solchen überwachten Zeitfensters ein erwarteter Programmbefehl einer anderen Steuervorrichtung ausbleibt, so kann eine entsprechende Fehlermeldung erzeugt werden, auch dann, wenn eine Steuervorrichtung vollständig ausfällt und aus diesem Grunde keinen Folgebefehl an eine andere Steuervorrichtung mehr absetzen kann.

Ein Ausführungsbeispiel der Erfindung ist in der Zeichnung dargestellt und in der nachfolgenden Beschreibung näher erläutert. Es zeigen:
- Fig. 1: ein kein Ausführungsbeispiel der Erfindung darstellendes Steuer- und/oder Antriebssystem mit vier Aktoranordnungen und vier entsprechenden Steuervorrichtungen, die über ein elektrisches Bussystem miteinander verbunden sind, und
- Fig. 2: ein Ausführungsbeispiel der Erfindung, bei dem drei Aktoranordnungen mit entsprechenden Steuervorrichtungen über eine drahtlose Übertragungseinrichtung miteinander in Wirkverbindung stehen.

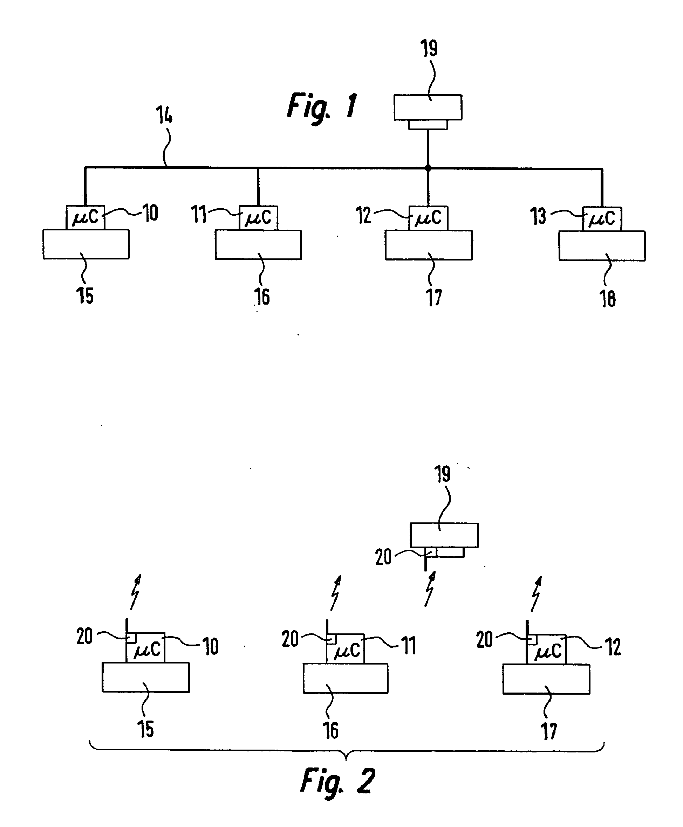

Bei dem in Fig. 1 dargestellten Steuer- und/oder Antriebssystem sind vier autonome programmgesteuerte elektronische Steuervorrichtungen 10 - 13 über einen Datenbus 14 miteinander verbunden. Jede der vier Steuervorrichtungen 10 - 13 steuert fluidische und/oder elektrische Aktoranordnungen 15 - 18. Bei solchen Aktoranordnungen handelt es sich beispielsweise um Servoantriebe, Stellantriebe, Linearantriebe, Drehantriebe, Motoren, Kolben-Zylinder-Anordnungen, Ventile und dergleichen, wobei jede Aktoranordnung aus einem solchen Aktor oder aus einer Kombination solcher Aktoren bestehen kann. Dabei kann eine Aktoranordnung rein fluidisch oder rein elektrisch oder gemischt ausgebildet sein. Die Steuervorrichtungen 10 - 13 können dabei an oder in den Aktoranordnungen 15 - 18 angeordnet oder an oder in diesen integriert sein.

Alle Steuervorrichtungen 10 - 13 sind gleichberechtigt und steuern mit einem eigenen Programm die jeweils zugeordnete Aktoranordnung 15 - 18. Ein Zusammenwirken aller Steuervorrichtungen 10 - 13 erfolgt dadurch, dass jede Steuervorrichtung in ihrem Programm, das heißt während des Programms oder am Ende des Programms, Programmstart- bzw. Programmauslösebefehle für eine oder mehrere der anderen Steuervorrichtungen 10 - 13 enthält. An der betreffenden Stelle wird ein solcher Programmstartbefehl oder Programmauslösebefehl über den Datenbus 14 der betreffenden Steuervorrichtung 10 - 13 übermittelt, die dann mit ihrem Programm zu arbeiten beginnt und wiederum ihrerseits eine oder mehrere der übrigen Steuervorrichtungen veranlaßt, mit dem Programm, also der Steuerung der zugeordneten Aktoranordnung 15 - 18, zu beginnen. Solche Programmauslösebefehle können beispielsweise auch darin bestehen, eine andere Steuervorrichtung zu veranlassen, ihr Programm abzubrechen, Programmteile zu überspringen oder mit anderen Programmteilen weiterzumachen.

Den Steuervorrichtungen 10 - 13 können in der Figur nicht dargestellte Sensoren zugeordnet sein, die entweder an oder in den jeweiligen Aktoren oder auch räumlich entfernt angeordnet sind. Hierdurch lassen sich beispielsweise auch Regelvorgänge realisieren. Auch die Übermittlung von Sensorsignalen kann bei Bedarf über den Datenbus 14 erfolgen.

Zusätzlich an den Datenbus 14 angeschlossen ist eine Fehlermelde- und/oder -registrieranordnung 19. Jede Steuervorrichtung 10 - 13 meldet eventuelle Störungen oder Fehler über den Datenbus 14 an diese Fehlermelde- und/oder -registrieranordnung 19, wo sie angezeigt oder bei entsprechendem Wunsch auch registriert werden, damit sie zu Diagnosezwecken und bei der Fehlersuche abgefragt werden können. Die Anzeige kann über ein nicht dargestelltes Display, über Kontrolleuchten und/oder auch akustisch erfolgen.

Um zu vermeiden, daß bei einem Totalausfall oder gravierenden Fehler in einer Steuervorrichtung 10 - 13 kein Fehlermeldesignal oder Diagnosesignal mehr abgesetzt werden kann und bei Ausbleiben des vorgesehenen Programmauslösebefehls für eine andere Steuervorrichtung das ganze System den Betrieb einstellt, besitzen die Steuervorrichtungen 10 - 13 eigenständige Überwachungsfunktionen, durch die der Funktionsablauf des Gesamtsystems wenigstens in notwendigen Bereichen überwacht werden kann. Dies erfolgt beispielsweise durch Vorgabe von Zeitfenstern, innerhalb derer ein Programmauslösebefehl von einer Steuervorrichtung eingehen muß. Wenn dieser nach Ablauf des Zeitfensters noch nicht eingetroffen ist, wird eine entsprechende Fehlermeldung oder Warnmeldung an die Fehlermelde- und/oder -registrieranordnung 19 abgesandt.

Anstelle einer separaten Fehlermelde- und/oder -registrieranordnung 19 können die entsprechenden Funktionen auch zusätzlich in einer der Steuervorrichtungen 10 - 13 enthalten sein, so daß die übrigen Steuervorrichtungen entsprechende Fehlermeldungen oder Diagnosemeldungen an diese Steuervorrichtung absenden. Darüber hinaus ist es selbstverständlich auch möglich, dass jede Steuervorrichtung 10 - 13 über ein eigenes Fehlermeldesystem verfügt.

Der in Fig. 1 dargestellte Datenbus 14 ist als elektrisches oder optisches Bussystem ausgebildet. Anstelle eines Bussystems tritt gemäß Fig. 2 als Ausführungsbeispiel der Erfindung eine drahtlose Signalübertragungseinrichtung. Jede Steuervorrichtung 10 - 13 sowie die Fehlermelde- und/oder registrieranordnung 19 sind mit Sendeempfängern 20 für Funksignale ausgestattet, so dass die Übertragung der Programmstart- und/oder Programmauslösebefehle sowie der Fehlermeldungen und Diagnosemeldungen mittels dieser Funksignale erfolgt. Im Übrigen entspricht die Wirkungsweise des in Fig. 2 dargestellten Ausführungsbeispiels der des in Fig. 1 dargestellten Steuer- und/oder Antriebssystems. Gleiche oder gleichwirkende Baugruppen sind mit denselben Bezugszeichen versehen und nicht nochmals beschrieben. In Fig. 2 sind nur drei Steuervorrichtungen 10 - 12 und drei Aktoranordnungen 15 - 17 dargestellt, um zu zeigen, dass die Zahl der Steuervorrichtungen bzw. Aktoranordnungen nahezu beliebig sein kann.

Als drahtlose Signalübertragungseinrichtung können anstelle einer Funkübertragungseinrichtung auch optische und Infrarot-Übertragungssysteme treten.

## Patentansprüche

1. Elektrofluidisches Steuer- und/ oder Antriebssystem mit mehreren Aktoranordnungen (15 - 18), die wenigstens teilweise als fluidische Aktoranordnungen ausgebildet sind **dadurch gekennzeichnet, daß** jede Aktoranordnung (15 - 18) mit einer autonomen, programmgesteuerten elektronischen Steuervorrichtung (10 - 13) versehen ist, wobei die Steuervorrichtungen (10-13) an oder in den Aktoranordnungen (15-18) angeordnet oder integriert sind und mit einer als drahtlose Signalübertragungseinrichtung ausgebildeten Kommunikationseinrichtung (20) zur Datenübertragung zwischen den Steuervorrichtungen, wobei jede elektronische Steuervorrichtung (10 - 13) Mittel zur Bildung und Übertragung von Programmstart- und/oder Programmauslösebefehlen über die Kommunikationseinrichtung (20) zu wenigstens einer anderen der elektronischen Steuervorrichtungen (10 - 13) besitzt, wobei alle Steuervorrichtungen (10-13) gleichberechtigt sind und mit einem eigenen Programm die jeweils zugeordnete Aktoranordnung (15-18) steuern.

2. Steuer- und/oder Antriebssystem nach Anspruch 1, **dadurch gekennzeichnet, daß** die Aktoranordnungen (15 - 18) wenigstens teilweise mehrere Aktoren enthalten, und insbesondere gleichartige oder verschiedenartige Aktoren aufweisen.

3. Steuer- und/oder Antriebssystem nach Anspruch 1 oder 2, **dadurch gekennzeichnet, daß** die Aktoranordnungen (15 - 18) wenigstens teilweise fluidische und elektrische Aktoren enthalten.

4. Steuer- und/oder Antriebssystem nach Anspruch 1 oder 2, **dadurch gekennzeichnet, daß** Aktoranordnungen (15 - 18) vorgesehen sind, die nur fluidische oder nur elektrische Aktoren enthalten.

5. Steuer- und/oder Antriebssystem nach einem der vorhergehenden Ansprüche, **dadurch gekennzeichnet, daß** Servoantriebe, Stellantriebe, Linearantriebe, Drehantriebe, Motoren, Kolben-Zylinder-Anordnungen und/oder Ventile als Aktoren vorgesehen sind.

6. Steuer- und/oder Antriebssystem nach einem der vorhergehenden Ansprüche, **dadurch gekennzeichnet, daß** den Steuervorrichtungen (10 - 13) und/oder Aktoranordnungen (15 - 18) wenigstens teilweise Sensoren zugeordnet sind, die insbesondere in oder an den entsprechenden Aktoranordnungen (15 - 18) oder Aktoren vorgesehen sind.

7. Steuer- und/oder Antriebssystem nach einem der vorhergehenden Ansprüche, **dadurch gekennzeichnet, daß** eine Fehlermelde- und/oder -registrieranordnung (19) mit der Kommunikationseinrichtung (14; 20) in Wirkverbindung steht, und daß die Steuervorrichtungen (10 - 13) Mittel zur Übertragung eventueller Fehler- oder Störungsmeldungen und/oder Diagnosemeldungen an die Fehlermelde- und/oder -registrieranordnung (19) besitzen, wobei eine der Steuervorrichtungen als Fehlermelde- und/oder -registrieranordnung ausgebildet ist oder eine separate Fehlermelde- und/oder -registrieranordnung (19) vorgesehen ist.

8. Steuer- und/oder Antriebssystem nach einem der vorhergehenden Ansprüche, **dadurch gekennzeichnet, daß** die elektronischen Steuervorrichtungen (10 - 13) Mittel zur wenigstens teilweisen Überwachung des Funktionsablaufs des gesamten Systems oder des Funktionsablaufs zwischen wenigstens zwei der Steuervorrichtungen aufweisen, wobei insbesondere Zeitüberwachungseinrichtungen für bestimmte Eingangsbefehle und/oder Funktionsabläufe vorgesehen sind.

## Claims

1. Electro-fluidic control and/or drive system with several actuator assemblies (15 - 18) which are at least partly in the from of fluidic actuator assemblies, **characterised in that** each actuator assembly (15 - 18) is provided with an autonomous, program-controlled electronic control unit (10 - 13), wherein the electronic control units (10 - 13) are located on or in or integrated in the actuator assemblies (15 - 18), and with a communications device (20) in the form of a wireless signal transmission device for data transmission between the control units, wherein each electronic control unit (10 - 13) has means of forming and transmitting program start and/or program initiation commands via the communications device (20) to at least one other of the electronic control units (10 - 13), wherein all control units (10 - 13) have equality of access, and control the respectively assigned actuator assembly (15 - 18) by a separate program.

2. Control and/or drive system according to claim 1, **characterised in that** the actuator assemblies (15 - 18) contain at least in part several actuators, and in particular have similar or different types of actuators.

3. Control and/or drive system according to claim 1 or 2, **characterised in that** the actuator assemblies (15 - 18) contain at least in part fluidic and electrical actuators.

4. Control and/or drive system according to claim 1 or 2, **characterised in that** actuator assemblies (15 - 18) are provided which contain only fluidic or only electrical actuators.

5. Control and/or drive system according to any of the preceding claims, **characterised in that** servo drives, control drives, linear drives, rotary drives, motors, piston-cylinder assemblies and/or valves are provided as actuators

6. Control and/or drive system according to any of the preceding claims, **characterised in that** the control units (10 - 13) and/or actuator assemblies (15 - 18) are at least in part assigned sensors, which are provided in particular in or on the relevant actuator assemblies (15 - 18) or actuators.

7. Control and/or drive system according to any of the preceding claims, **characterised in that** a fault indication and/or recording unit (19) is in effective communication with the communications device (14; 20), and that the control units (10 - 13) have means of transmitting any error or fault messages and/or diagnostic reports to the fault indication and/or recording unit (19), wherein one of the control units is designed as a fault indication and/or recording unit or a separate fault indication and/or recording unit (19) is provided.

8. Control and/or drive system according to any of the preceding claims, **characterised in that** the electronic control units (10 - 13) have means for at least partial monitoring of the functional sequence of the overall system or of the functional sequence between at least two of the control units, with time monitoring devices in particular being provided for specific input commands and/or functional sequences.

## Revendications

1. Système de commande et/ou d'entraînement électrofluidique avec un ou plusieurs agencements d'actionneurs (15 à 18) qui sont conçus au moins partiellement en tant qu'agencements d'actionneurs fluidiques, **caractérisé en ce que** chaque agencement d'actionneurs (15 à 18) est muni d'un dispositif de commande (10 à 13) électronique autonome, commandé par programme, les dispositifs de commande (10 à 13) étant disposés ou intégrés sur ou dans les agencements d'actionneurs (15 à 18) et avec un dispositif de communication (20) conçu en tant que dispositif de transmission de signaux sans fil, pour la transmission de données entre les dispositifs de commande, chaque dispositif électronique de commande (10 à 13) comportant des moyens pour la création et la transmission d'instructions de démarrage et/ou de déclenchement de programmes par l'intermédiaire du dispositif de communication (20) vers au moins un autre des dispositifs de commande (10 à 13), tous les dispositifs de commande (10 à 13) ayant les mêmes habilitations et pilotant avec un programme propre l'agencement d'actionneurs (15 à 18) respectivement associé.

2. Système de commande et /ou d'entraînement selon la revendication 1, **caractérisé en ce que** les agencements d'actionneurs (15 à 18) comprennent au moins en partie plusieurs actionneurs, et comportent notamment des actionneurs de type identique ou différent.

3. Système de commande et /ou d'entraînement selon la revendication 1 ou 2, **caractérisé en ce que** les agencements d'actionneurs (15 à 18) comprennent au moins en partie des actionneurs fluidiques et électriques.

4. Système de commande et /ou d'entraînement selon la revendication 1 ou 2, **caractérisé en ce qu'**on a prévu des agencements d'actionneurs (15 à 18) ne contenant que des actionneurs fluidiques ou que des actionneurs électriques.

5. Système de commande et /ou d'entraînement selon l'une quelconque des revendications précédentes, **caractérisé en ce qu'**on a prévu des servomoteurs, des mécanismes de commande, des entraînements linéaires, des entraînements en rotation, des moteurs, des agencements piston/cylindre et/ou des soupapes en tant qu'actionneurs.

6. Système de commande et /ou d'entraînement selon l'une quelconque des revendications précédentes, **caractérisé en ce que** des capteurs qui sont prévus notamment dans ou sur les agencements d'actionneurs correspondants (15 à 18) sont au moins associés en partie aux dispositifs de commande (10 à 13) et/ou aux agencements d'actionneurs (15 à 18).

7. Système de commande et /ou d'entraînement selon l'une quelconque des revendications précédentes, **caractérisé en ce qu'**un agencement de signalisation et/ou d'enregistrement des défauts (19) est en interaction avec le dispositif de communication (14 ; 20) et **en ce que** les dispositifs de commande (10 à 13) comportent des moyens pour la transmission d'éventuels messages de défauts ou de pannes et/ou messages de diagnostic à l'agencement de signalisation et/ou d'enregistrement des défauts (19), l'un des dispositifs de commande étant conçu en tant qu'agencement de signalisation et/ou d'enregistrement des défauts ou **en ce qu'**on a prévu un agencement séparé de signalisation et/ou d'enregistrement des défauts (19).

8. Système de commande et ou d'entraînement selon l'une quelconque des revendications précédentes, **caractérisé en ce que** les dispositifs électroniques de commande (10 à 13) comportent des moyens pour la surveillance au moins partielle du cycle fonctionnel de l'ensemble du système ou du cycle fonctionnel entre au moins deux des dispositifs de commande, des dispositifs de surveillance horaire étant prévus notamment pour des instructions prédéfinies d'entrée et/ou cycles fonctionnels.
